# EUROPÄISCHE PATENTSCHRIFT

(11) **EP 1 189 489 B1**
(45) Veröffentlichungstag und Bekanntmachung des Hinweises auf die Patenterteilung: **31.05.2006**
(21) Anmeldenummer: 01122010.0
(22) Anmeldetag: 13.09.2001
(51) Int. Cl.: H05B 41/36, H05B 41/38

(54) **Steuerschaltung mit Konfigurierungseingang**
Control circuit with configuration intput
Circuit de commande avec une entrée de configuration

(30) Priorität: 15.09.2000 DE 10045713; 13.06.2001 DE 10128587
(43) Veröffentlichungstag der Anmeldung: 20.03.2002
(73) Patentinhaber: TridonicAtco GmbH & Co. KG, 6851 Dornbirn (AT)
(72) Erfinder: Zudrell-Koch, Stefan, 6850 Dornbirn (AT); Knödgen, Horst, 80997 München (DE)
(74) Vertreter: Rupp, Christian

(56) Entgegenhaltungen:
- WO-A-00/24230
- WO-A-98/18296
- WO-A-98/39949
- US-A- 5 187 414
- UNITRODE: "linear integrated circuits data and applications handbook" 1990 , UNITRODE INTEGRATED CIRCUITS CORP , USA XP002172830 * Seite 5-64 *

## Beschreibung

Die vorliegende Erfindung betrifft eine Steuerschaltung mit einem Konfigurierungseingang für den Einsatz in einem elektronischen Vorschaltgerät.

Elektronische Vorschaltgeräte zum Betreiben von Gasentladungslampen weisen üblicherweise eine oder mehrere Steuerschaltungen zum Durchführen von Regelvorgängen auf. Oftmals sind diese Steuerschaltungen als integrierte Schaltungen ausgebildet, da auf diese Weise kompakte und schneller arbeitende Schaltungen realisiert werden können. Bei einem in der WO 99/34647 A1 offenbarten elektronischen Vorschaltgerät ist die Steuerschaltung zum Ansteuern des Wechselrichters beispielsweise in Form einer anwendungsspezifischen integrierten Schaltung (Application Specific Integrated Circuit, ASIC) ausgebildet.

Ein Nachteil von integrierten Schaltungen besteht allerdings darin, daß eine nachträgliche Parameteränderung oder sonstige Beeinflussung nicht ohne weiteres durchgeführt werden kann. Während bei Schaltungen, die in rein analoger Form vorliegen, viele Möglichkeiten bestehen, nachträglich in die Schaltung einzugreifen, um bestimmte Parameter zur Anpassung an den verwendeten Lampentyp oder dgl. zu ändern, stehen die Parameter bei einer integrierten Schaltung in der Regel fest.

Um zu einem späteren Zeitpunkt zumindest noch einen gewissen Einfluß nehmen zu können, weist das in der WO 99/34647 A1 beschriebene ASIC einen Konfigurierungseingang auf, der mit einem Konfigurierungswiderstand verbunden wird. Der zweite Anschluß des Konfigurierungswiderstands wird entweder gegen Masse oder ein Versorgungsspannungspotential gelegt. Die über den Widerstand abfallende Spannung wird dann mit einem internen Referenzwert verglichen, wobei beim Ansteuern des Wechselrichters eine erste Variante gewählt wird, wenn die über dem Konfigurierungswiderstand abfallende Spannung größer als das Referenzpotential ist, während das Betreiben der Lampe nach einer zweiten Variante erfolgt, wenn die gemessene Spannung kleiner als der Referenzwert ist. In der WO 99/34647 A1 kann auf diese Weise zwischen einem Warmstart oder einem Kaltstart der Lampe gewählt werden.

Bei dieser bekannten Lösung kann allerdings nur geringfügig nachträglich in die Schaltung eingegriffen werden, da die Steuerschaltung lediglich feststellen kann, ob die über dem Konfigurierungswiderstand abfallende Spannung größer oder kleiner als der Referenzwert ist. Um umfangreichere Änderungen vornehmen zu können, beispielsweise einen bestimmten Lampentyp aus einer Vielzahl von Möglichkeiten auszuwählen oder ein Zeitintervall für die Vorheizzeit einzustellen, wären mehrere derartige Konfigurierungseingänge notwendig, wodurch sich allerdings das Design der Schaltung verkomplizieren und diese einen größeren Platz in Anspruch nehmen würde. Die durch die Integrierung der Schaltung erzielten Vorteile würden hierdurch teilweise wieder verlorengehen.

Aus der WO00/24230 A1 ist ein elektronisches Vorschaltgerät zum Betreiben einer Gasentladungslampe bekannt, dessen Steuerschaltung einen Konfigurierungseingang aufweist, an den ein Spannungsteiler angeschlossen ist. Um den Typ der angeschlossenen Lampe zu erkennen, wird während einer Vorlaufphase zunächst eine Wechselspannung einer bestimmten Frequenz an den Lastkreis angelegt und der daraufhin entstehende Strom abgegriffen und einem A/D-Wandler zugeführt. Anhand des von dem A/D-Wandler gelieferten Signals erkennt eine Auswahlschaltung durch Vergleichen mit in einem Speicher abgelegten Werten, um welchen Lampentyp es sich handelt, und steuert dementsprechend drei steuerbare Schalter an, deren Eingänge mit verschiedenen Abgreifpunkten des Spannungsteilers und deren Ausgänge mit einem Komparator verbunden sind. Der Spannungsteiler wiederum ist mit einer Gleichstromquelle verbunden, so dass letztendlich durch die Wahl der Schalter ein analoges Spannungssignal erzeugt wird, welches dem Komparator zugeführt wird.

Aus UNTTRODE: "linear integrated circuits data an applications handbook" 1990, UNITRODE INTEGRATED CIRCUITS CORP, USA, Seite 5-64 ist eine integrierte Schaltung mit einem Konfigurierungseingang bekannt, mit dem der Anschluß eines Konfigurierungselements verbindbar ist und der andererseits an eine Stromquelle anschließbar ist, die mit ihrem anderen Anschluß auf einem Bezugspotential liegt.

Es ist Aufgabe der vorliegenden Erfindung, eine Möglichkeit anzugeben, bei einer Steuerschaltung nachträglich Parameteränderungen vorzunehmen, ohne daß hierfür eine Vielzahl von Konfigurierungseingängen notwendig wäre.

Diese Aufgabe wird durch eine Steuerschaltung gemäß Anspruch 1 gelöst, welche einen Konfigurierungseingang zum Erfassen eines Konfigurierungsparameters aufweist, mit dem der eine Anschluß eines Konfigurierungswiderstandes verbunden ist, dessen zweiter Anschluß auf ein erstes Bezugspotential gelegt ist. Innerhalb der Steuerschaltung eine Stromquelle vorgesehen, die mit ihrem einen Anschluß auf einem zweiten Bezugspotential liegt und mit ihrem anderen Anschluß mit dem Konfigurierungseingang verbunden ist. Erfindungsgemäß enthält die Steuerschaltung einen Analog/Digital-Wandler, der ebenfalls mit dem Konfigurierungseingang verbunden ist und einen dem Widerstandswert des Konfigurierungswiderstandes entsprechenden Digitalwert mit mindestens 2 bit erzeugt, sowie eine Konfigurierungsschaltung mit einem Speicher, in dem der von dem Analog/Digital-Wandler erzeugte Digitalwert gespeichert wird.

Der wesentliche Erfindungsgedanke besteht somit darin, daß im Gegensatz zu der bisher bekannten Lösung nicht lediglich eine Entweder-Oder-Entscheidung getroffen wird, sondern daß die tatsächliche Höhe des Widerstandswertes als Konfigurierungsparameter herangezogen wird. Hierdurch wird dem Konfigurierungswiderstand ein größerer Informationsgehalt zugewiesen, wobei das Umsetzen in einen Digitalwert, der anschließend in einen Speicher geschrieben wird, sicherstellt, daß diese Information während eines späteren Betriebs von der Steuerschaltung berücksichtigt werden kann.

Hierbei ist anzumerken, daß zur nachträglichen Konfigurierung von digitalen Schaltungen üblicherweise logische Konfigurierungseingänge verwendet werden. Analog zu der aus der WO 99/34647 A1 bekannten Schaltung kann allerdings bei einem solchen logischen Konfigurierungseingang lediglich eine Entweder-Oder-Entscheidung getroffen werden. Um daher eine umfangreiche Parametereinstellung vornehmen zu können, wäre eine entsprechende - verhältnismäßig hohe - Zahl solcher logischen Eingänge notwendig, was durch die vorliegende Erfindung vermieden wird.

Weiterbildungen der Erfindung sind Gegenstand der Unteransprüche.

So ist bei der erfindungsgemäßen Ausgestaltung der Steuerschaltung von wesentlicher Bedeutung, daß sichergestellt werden muß, daß die über die Wahl des Konfigurierungswiderstandes eingestellten Konfigurierungsparameter auch zuverlässig und eindeutig von der Steuerschaltung erkannt werden. Beispielsweise hätte eine fehlerhafte Erkennung des über den Konfigurierungswiderstand eingestellten Lampentyps zur Folge, daß die Lampe unter falschen Betriebsbedingungen betrieben und dabei möglicherweise beschädigt oder gar zerstört wird. Hierbei ist zu berücksichtigen, daß die Widerstandswerte, die Stromquellen und die Bezugspotentiale gewissen Toleranzen unterliegen, die zu einer Verfälschung des von dem Analog/Digital-Wandlers erzeugten Digitalwerts führen können. Um daher sicherzustellen, daß ein nachträglich eingestellter Konfigurierungsparameter auch zuverlässig erkannt wird, ist es notwendig, jedem möglichen Konfigurierungsparameter einen bestimmten Widerstandsbereich zuzuordnen. Aufgrund der hierdurch begrenzten Auflösung kann auch bei der vorliegenden Erfindung zwischen einer begrenzten Anzahl von Konfigurierungsparametern gewählt werden.

Um allerdings den mit einem einzigen Konfigurierungseingang erzielbaren Informationsgehalt weiter zu erhöhen, kann gemäß einer Weiterbildung vorgesehen sein, daß die Steuerschaltung eine zweite Stromquelle aufweist, die mit ihrem einen Anschluß auf einem weiteren Bezugspotential liegt und mit ihrem anderen Anschluß ebenfalls mit dem Konfigurierungseingang verbindbar ist. Das Verbinden der beiden Stromquellen mit dem Konfigurierungseingang erfolgt über steuerbare Schalter, welche von der Konfigurierungsschaltung derart angesteuert werden, daß zunächst die erste Stromquelle und anschließend die zweite Stromquelle mit dem Konfigurierungseingang verbunden wird. Extern kann der Konfigurierungswiderstand dann entweder auf das erste oder das zweite Bezugspotential gelegt werden, so daß nicht nur der Widerstandswert des Konfigurierungswiderstandes sondern auch dessen Anordnung berücksichtigt wird. In einer zusätzlichen Weiterbildung ist es dann auch möglich, zwei Konfigurierungswiderstände zu verwenden, wobei der eine auf das erste Bezugspotential und der zweite auf das zweite Bezugspotential gelegt wird. Durch ein aufeinanderfolgendes Verbinden der beiden Stromquellen mit dem Konfigurierungseingang können jeweils getrennt die Widerstandswerte der beiden Konfigurierungswiderstände ermittelt und als Konfigurierungsparameter gespeichert werden.

Das Abspeichern der Konfigurierungsparameter in digitaler Form ist insbesondere dann von Vorteil, wenn diese Digitalwerte unmittelbar von der Steuerschaltung umgesetzt werden können. Gemäß einer Weiterbildung der Erfindung ist daher die Steuerschaltung Bestandteil eines elektronischen Vorschaltgeräts und erfaßt einen oder mehrere Betriebsparameter des Lastkreises und/oder einer Glättungsschaltung zum Erzeugen einer Zwischenkreisspannung und steuert in Abhängigkeit von den erfaßten Betriebsparametern den Wechselrichter und/oder einen steuerbaren Schalter der Glättungsschaltung an. Dabei enthält die Steuerschaltung einen Analog/Digital-Wandler, der den erfaßten Betriebsparameter in einen aus mindestens 2 bit bestehenden Digitalwert umsetzt, wobei die Steuerschaltung auf Basis dieses Digitalwerts mit Hilfe eines digitalen Regelkreises eine Schaltinformation zum Betreiben des Wechselrichters und/oder des steuerbaren Schalters berechnet und dabei die in dem Speicher der Konfigurierungsschaltung gespeicherten Konfigurierungsparameter berücksichtigt. Die Steuerschaltung arbeitet in dieser Weiterbildung somit vollständig digital, so daß die nachträglich eingestellten Konfigurierungsparameter auf besonders einfache Weise berücksichtigt werden können.

Bei den erfaßten Betriebsparametern für die Regelkreise kann es sich beispielsweise um die Zwischenkreisspannung, die Lampenspannung oder den Lampenstrom handeln. Vorzugsweise ist die Steuerschaltung als anwendungsspezifische integrierte Schaltung ausgebildet. Ferner weist die Steuerschaltung vorzugsweise lediglich einen einzigen Analog/Digital-Wandler auf, der zum Umsetzen der für die verschiedenen Regelvorgänge erfaßten Betriebsparameter sowie des Konfigurierungswiederstandes in digitale Werte im Zeitmultiplex arbeitet.

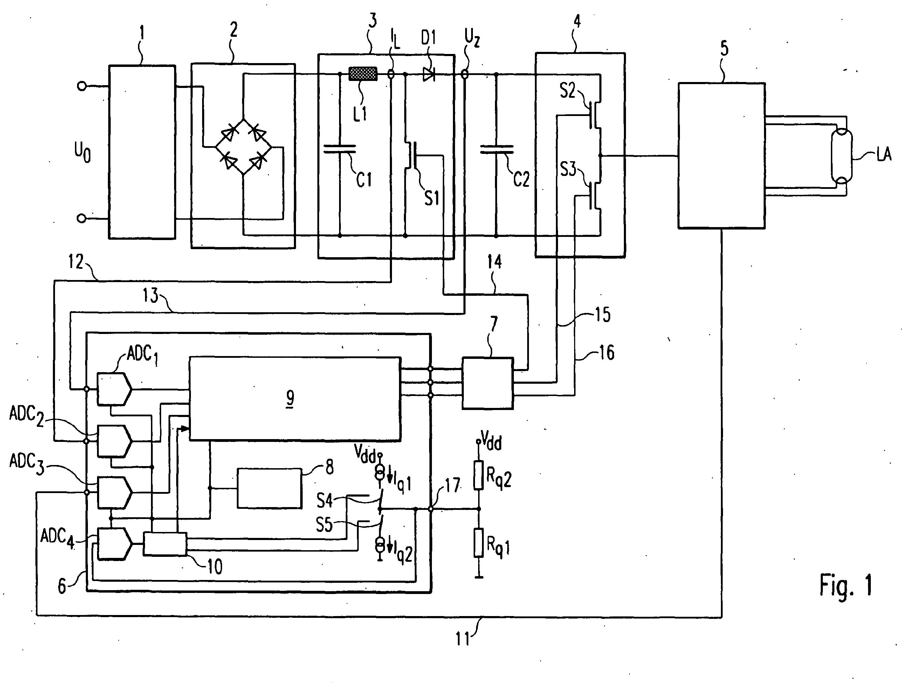

Nachfolgend soll die Erfindung anhand der beiliegenden Zeichnung erläutert werden, wobei die einzige Figur 1 ein elektronisches Vorschaltgerät zum Betreiben einer Gasentladungslampe darstellt, welches die erfindungsgemäße Steuerschaltung beinhaltet.

Bevor allerdings die erfindungsgemäße Steuerschaltung näher erläutert wird, soll zunächst der allgemeine Aufbau des in Figur 1 dargestellten elektronischen Vorschaltgerätes beschrieben werden. Den Eingang des Vorschaltgerätes bildet dabei ein mit der Netzversorgungsspannung U₀ verbundenes Eingangsfilter 1, das ausgangsseitig mit einem Gleichrichter 2 verbunden ist. Die gleichgerichtete Versorgungswechselspannung wird einer Glättungsschaltung 3 zugeführt, welche im vorliegenden Beispiel als Hochsetzsteller ausgebildet ist und über dem ausgangsseitig angeordneten Speicherkondensator C2 eine Zwischenkreisspannung U_{Z} erzeugt. Diese Zwischenkreisspannung U_{Z} wird von einem Wechselrichter 4 in eine hochfrequente Wechselspannung umgesetzt, die dem Lastkreis mit der daran angeschlossenen Gasentladungslampe LA zugeführt wird.

Der Hochsetzsteller wird durch einen Glättungskondensator C1, eine Induktivität L1, eine Diode D1und einen steuerbaren Schalter S 1 in Form eines MOS-Feldeffekttransistors gebildet. Der Wechselrichter 4 besteht aus zwei in einer Halbbrückenanordnung angeordneten MOS-Feldeffekttransistoren S2 und S3. Diese drei Transistoren S1-S3 werden durch eine Treiberschaltung 7 angesteuert, die wiederum entsprechende Steuerinformationen von einer Steuerschaltung 6 erhält, welche die Steuerinformationen auf Basis von Betriebsparametern der Glättungsschaltung 3 und des Lastkreises 5 berechnet. Hierzu werden der Steuerschaltung 6 über die Eingangsleitungen 11-13 Betriebsparameter des Lastkreises 5 - beispielsweise die Lampenspannung und/oder der Lampenstrom - und der Glättungsschaltung 3, im vorliegenden Beispiel die Zwischenkreisspannung U_{Z} und der über die Induktivität L1 fließende Strom I_{L} - genauer gesagt, ein diesem Strom I_{L} entsprechender Parameter - übermittelt.

Die über die drei Eingangsleitungen 11-13 erfaßten Betriebsparameter werden mit Hilfe von Analog/Digital-Wandlern ADC₁ - ADC₃ in Digitalwerte umgesetzt und einem digitalen Regelkreis 9 zugeführt. Eine Synchronisierung der Analog/Digital-Wandler ADC₁ - ADC₃ und des Regelkreises 9 erfolgt mit Hilfe eines Taktgebers 8, der ein entsprechendes Taktsignal an die einzelnen Komponenten der Steuerschaltung 6 übermittelt. Es ist anzumerken, daß entgegen der schematischen Darstellung in Fig. 1 die Steuerschaltung 6 in Praxis vorzugsweise lediglich einen einzigen Analog/Digital-Wandler aufweist, der im Zeitmultiplex betrieben wird und die über die Eingangsleitungen 11-13 zugeführten Betriebsparameter nacheinander in die entsprechenden Digitalwerte umsetzt.

Durch diese digitale Ausgestaltung kann die Steuerschaltung 6 in ihren Abmessungen äußerst kompakt gehalten werden. Darüber hinaus können hierdurch optimale und schnelle Regeleigenschaften erzielt werden. Ferner wird das elektronische Vorschaltgerät in die Lage versetzt, verschiedene Lampentypen betreiben zu können. Um allerdings vor einem Betrieb der Steuerschaltung 6 den entsprechenden Lampentyp anzeigen zu können, muß eine nachträgliche Konfigurierungsparameteränderung gewährleistet werden.

Hierzu ist der Konfigurierungseingang 17 vorgesehen, dessen Funktion nachfolgend erläutert werden soll. Intern kann der Konfigurierungseingang 17 mit zwei Stromquellen I_{q1} und I_{q2} verbunden werden, die zum einen mit einem internen Versorgungsspannungspotential V_{dd} und zum anderen mit Masse verbunden sind. Das Verbinden der beiden Stromquellen I_{q1} und I_{q2} mit dem Konfigurierungseingang 17 erfolgt über zwei Schalter S4 und S5, die von einer in der Steuerschaltung 6 vorgesehenen Konfigurierungsschaltung 10 angesteuert werden.

Extern kann der Konfigurierungseingang 17 mit zwei Konfigurierungswiderständen R_{q1} und R_{q2} verbunden werden, die mit ihren verbleibenden Anschlüssen zum einen mit Masse und zum anderen mit dem ebenfalls von der Steuerschaltung 6 zur Verfügung gestellten Versorgungsspannungspotential V_{dd} verbunden werden.

Zum Durchführen der Konfigurierung schaltet die Konfigurierungsschaltung 10 die beiden Schalter S4 und S5 beispielsweise derart, daß zunächst die Stromquelle I_{q1} mit dem Konfigurierungseingang 17 verbunden wird, während der Schalter S5 geöffnet bleibt. In diesem Fall fällt über dem ersten Konfigurierungswiederstand R_{q1} eine Spannung ab, deren Höhe von dem Widerstandswert abhängig ist. Diese Spannung wird von dem Analog/Digital-Wandler ADC₄ erfaßt und in einen eine Genauigkeit von mindestens 2 bit aufweisenden Digitalwert umgesetzt. Die Umsetzung in den Digitalwert erfolgt dabei nach einem vorgegebenen Toleranzschema, welches berücksichtigt, daß bei höheren Widerstandswerten und damit Spannungswerten größere Abweichungen auftreten können. Demzufolge steigen die einer Erhöhung des Digitalwerts entsprechenden Spannungsstufen an. Auf diese Weise kann unter Berücksichtigung der Toleranzen mit einem Konfigurierungswiderstand eine Informationstiefe von 4 bit erhalten werden, wobei eine Fehlerkennung ausgeschlossen ist.

Der auf diese Weise erzeugte Digitalwert wird von der Konfigurierungsschaltung 10 gespeichert, die in einem weiteren Schritt die Schalter S4 und S5 derart ansteuert, daß nunmehr die zweite Stromquelle I_{q2} mit dem Konfigurierungseingang 17 verbunden wird, während der Schalter S4 geöffnet ist. In diesem Fall fließt der von der zweiten Stromquelle erzeugte Strom nunmehr über den zweiten Konfigurierungswiderstand R_{q2}, wobei wiederum der an dem Konfigurierungseingang 17 anliegende Spannungswert von dem Analog/Digital-Wandler ADC₄ erfaßt und in eine entsprechende digitale Information umgesetzt wird. Auch dieser zweite Digitalwert wird in der Konfigurierungsschaltung 10 gespeichert.

Die Umsetzung der an dem Konfigurierungseingang 17 anliegenden Spannungswerte erfolgt wiederum vorzugsweise durch einen einzigen in der Steuerschaltung 6 enthaltenen Analog/Digital-Wandler, der zum Umsetzen aller an den Eingängen der Steuerschaltung 6 anliegenden Signale benutzt wird und dementsprechend im Zeitmultiplex arbeitet.

Die durch die beiden Konfigurierungswiderstände R_{q1} und R_{q2} übermittelte Information wird dann zu einem späteren Zeitpunkt dem Regelkreis 9 zur Verfügung gestellt, so daß dieser die nachträglich eingestellten Konfigurierungsparameter beim Betreiben der Lampe berücksichtigen kann. Beispielsweise kann hierdurch nachträglich der gewünschte Lampentyp eingestellt werden. Selbstverständlich kann die Reihenfolge für das Ansteuern der beiden Schalter S4 und S5 auch vertauscht werden.

Alternativ zu der in Figur 1 dargestellten Variante besteht auch die Möglichkeit, lediglich einen einzigen Konfigurierungswiderstand zu verwenden und diesen entweder gegen das Versorgungsspannungspotential V_{dd} oder Masse zu schalten. Hierdurch können zwar weniger Informationen übermittelt werden, im Vergleich zu der in Fig. 1 dargestellten Variante mit zwei Konfigurierungswiderständen wird allerdings vermieden, daß über beide Widerstände permanent Strom fließt. Darüber hinaus kann die Wahl der Anordnung des einzigen Konfigurierungswiderstands als zusätzliche Information verwertet werden.

Gegenüber der bisher bekannten Lösung bietet die vorliegende Erfindung somit die Möglichkeit, bei Verwendung lediglich eines einzigen Konfigurierungseingangs nachträglich umfangreichere Konfigurierungsparameteränderungen vorzunehmen. Durch die digitale Ausführung der gesamten Steuerschaltung kann darüber hinaus das Vorschaltgerät in seinen Abmessungen äußerst kompakt gehalten werden, wobei ein weiterer Vorteil der digitalen Ausgestaltung darin besteht, daß bessere und flexiblere Regeleigenschaften erzielt werden. Vorzugsweise ist die erfindungsgemäße Steuerschaltung als anwendungsspezifische integrierte Schaltung (Application Specific Integrated Circuit, ASIC) ausgebildet.

## Patentansprüche

1. Steuerschaltung (6), zum Einsatz in einem elektrischen Vorschaltgerät zum Betreiben mindestens einer Gasentladungslampe (LA),
mit einem Konfigurierungseingang (17) zum Erfassen eines Konfigurierungsparameters, mit dem der eine Anschluß eines Konfigurierungswiderstandes (R_{q1}) verbunden ist, dessen anderer Anschluß auf ein erstes Bezugspotential gelegt ist,
mindestens eine Stromquelle (I_{q1}), die mit ihrem einen Anschluß auf einem zweiten Bezugspotential (V_{dd}) liegt und die mit ihrem anderen Anschluß mit dem Konfigurierungseingang (17) verbunden ist,
**gekennzeichnet durch**
einen Analog/Digital-Wandler (ADC₄), der mit dem Konfigurierungseingang (17) verbunden ist und einen dem Widerstandswert des Konfigurierungswiderstandes (R_{g1}) entsprechenden Digitalwert mit mindestens 2 bit erzeugt, und
eine Konfigurierungsschaltung (10), die mindestens einen Speicher enthält, in dem der Digitalwert gespeichert wird.

2. Steuerschaltung nach Anspruch 1,
**dadurch gekennzeichnet,**
**daß** die Stromquelle (I_{q1}) über einen steuerbaren Schalter (S4) mit dem Konfigurierungseingang (17) verbindbar ist, wobei dieser Schalter (S4) von der Konfigurierungsschaltung (10) gesteuert wird.

3. Steuerschaltung nach Anspruch 2,
**dadurch gekennzeichnet,**
**daß** diese eine weitere Stromquelle (I_{q2}) aufweist, die mit ihrem einen Anschluß auf dem ersten Bezugspotential liegt und die mit ihrem anderen Anschluß über einen zweiten steuerbaren Schalter (S5) mit dem Konfigurierungseingang (17) verbindbar ist,
wobei der Konfigurierungswiderstand (R_{q1}) mit seinem zweiten Anschluß auf das erste oder das zweite Bezugspotential zu legen ist und die beiden Schalter (S4, S5) von der Konfigurierungsschaltung (10) derart gesteuert werden, daß zunächst lediglich einer der beiden Schalter (S4, S5) und anschließend lediglich der andere geschlossen wird.

4. Steuerschaltung nach Anspruch 3,
**dadurch gekennzeichnet,**
**daß** mit dem Konfigurierungseingang (17) zwei Konfigurierungswiderstände (R_{q1}, R_{q2}) verbindbar sind, deren nicht mit dem Konfigurierungseingang (17) verbundene Anschlüsse zum einen auf das erste und zum anderen auf das zweite Bezugspotential zu legen sind,
wobei die Konfigurierungsschaltung (10) zwei den Widerstandswerten der beiden Konfigurierungswiderstände (R_{q1}, R_{g2}) entsprechenden Digitalwerte mit mindestens 2 bit in dem Speicher speichert.

5. Elektronisches Vorschaltgerät für mindestens eine Gasentladungslampe (LA), mit einer an eine Wechselspannungsquelle (U₀) anschließbaren Gleichrichterschaltung (2), einer an den Ausgang der Gleichrichterschaltung (2) angeschlossenen Glättungsschaltung (3) zum Erzeugen einer Zwischenkreisspannung (U_{Z}) und einem mit der Zwischenkreisspannung (U_{Z}) gespeisten Wechselrichter (4), an dessen Ausgang ein Anschlüsse für die Lampe (LA) enthaltender Lastkreis (5) angeschlossen ist,
wobei das Vorschaltgerät eine Steuerschaltung (6) aufweist, die einen oder mehrere Betriebsparameter des Lastkreises (5) und/oder der Glättungsschaltung (3) erfaßt und in Abhängigkeit von dem mindestens einen Betriebsparameter den Wechselrichter (4) und/oder einen steuerbaren Schalter (S1) der Glättungsschaltung ansteuert,
**dadurch gekennzeichnet,**
**daß** die Steuerschaltung nach einem der Ansprüche 1 bis 4 ausgebildet ist, und
**daß** die Steuerschaltung (6) ferner
a) den Analog/Digital-Wandler (ADC₁₋₄) auch zum Umsetzen des erfaßten Betriebsparameters des Lastkreises (5) und/oder der Glättungsschaltung (3) in einen aus mindestens 2 bit bestehenden weiteren Digitalwert nutzt oder
b) einen weiteren Analog/Digital-Wandler (ADC₁₋₄) zum Umsetzen des erfaßten Betriebsparameters des Lastkreises (5) und/oder der Glättungsschaltung (3) in einen aus mindestens 2 bit bestehenden weiteren Digitalwert aufweist,
wobei die Steuerschaltung (6) auf Basis dieses weiteren Digitalwerts in einem digitalen Regelkreis (9) eine Schaltinformation zum Betreiben des Wechselrichters (4) und/oder des steuerbaren Schalters (S1) des Schaltreglers berechnet und an eine Treiberschaltung (7) übermittelt, die diese Schaltinformation in ein entsprechendes Steuersignal umsetzt,
und wobei die Steuerschaltung (6) bei der Berechnung der Schaltinformation den mindestens einen in dem Speicher der Konfigurierungsschaltung (10) gespeicherten Wert berücksichtigt.

6. Elektronisches Vorschaltgerät nach Anspruch 5,
**dadurch gekennzeichnet,**
**daß** die Glättungsschaltung (3) durch einen Hochsetzsteller gebildet wird.

7. Elektronisches Vorschaltgerät nach Anspruch 6,
**dadurch gekennzeichnet,**
**daß** die Steuerschaltung (6) einen steuerbaren Schalter (S1) des Hochsetzstellers ansteuert.

8. Elektronisches Vorschaltgerät nach Anspruch 7,
**dadurch gekennzeichnet,**
**daß** die Steuerschaltung (6) die Zwischenkreisspannung (U_{Z}) erfaßt.

9. Elektronisches Vorschaltgerät nach Anspruch 7 oder 8,
**dadurch gekennzeichnet,**
**daß** die Steuerschaltung (6) den durch eine Induktivität (L) des Hochsetzstellers fließenden Strom (I_{L}) erfaßt.

10. Elektronisches Vorschaltgerät nach einem der Ansprüche 5 bis 9,
**dadurch gekennzeichnet,**
**daß** die Steuerschaltung (6) die Lampenspannung erfaßt.

11. Elektronisches Vorschaltgerät nach einem der Ansprüche 5 oder 10,
**dadurch gekennzeichnet,**
**daß** die Steuerschaltung (6) den Lampenstrom erfaßt.

12. Elektronisches Vorschaltgerät nach einem der Ansprüche 5 oder 11,
**dadurch gekennzeichnet,**
**daß** die Steuereinheit (6) einen Taktgeber (8) zum Übermitteln eines Taktsignales an die Komponenten (ADC₁ - ADC₄, 9, 10) der Steuereinheit (6) aufweist.

13. Elektronisches Vorschaltgerät nach einem der vorherigen Ansprüche,
**dadurch gekennzeichnet,**
**daß** die Steuereinheit (6) als anwendungsspezifische integrierte Schaltung ausgebildet ist.

14. Verfahren zum Konfigurieren einer Steuerschaltung, welche zum Einsatz in einem elektrischen Vorschaltgerät zum Betreiben mindestens einer Gasentladungslampe (LA) vorgesehen ist,
wobei
a) ein Konfigurierungseingang (17) der Steuerschaltung mit einem Anschluß eines Konfigurierungswiderstandes (R_{q1}) verbunden wird, dessen anderer Anschluß auf ein erstes Bezugspotential gelegt ist,
b) eine Stromquelle (I_{q1}), die mit einem Anschluß auf einem zweiten Bezugspotential (V_{dd}) liegt, mit ihrem anderen Anschluß mit dem Konfigurierungseingang (17) verbunden wird,
c) ein dem Widerstandswert des Konfigurierungswiderstandes (R_{g1}) entsprechender Digitalwert mit mindestens 2 bit erzeugt wird und
d) der Digitalwert in einer Konfigurierungsschaltung (10) der Steuerschaltung gespeichert wird.

## Claims

1. Control circuit (6), for use in an electrical ballast for the operation of at least one gas discharge lamp (LA),
having a configuration input (17) for the detection of a configuration parameter, with which input the one terminal of a configuration resistance (R_{q1}) is connected, the other terminal of which is placed at a first reference potential,
at least one current source (I_{q1}) which with its one terminal is at a second reference potential (V_{dd}) and with its other terminal is connected with the configuration input (17),
**characterized by**
an analog/digital converter (ADC₄), which is connected with the configuration input (17) and generates a digital value, having at least 2 bits, corresponding to the resistance value of the configuration resistance (R_{g1}), and
a configuration circuit (10), which contains at least a memory, in which the digital value is stored.

2. Control circuit according to claim 1,
**characterized in that**,
the current source (I_{q1}) can be connected via a controllable switch (S4) with the configuration input (17), wherein this switch (S4) is controlled by the configuration circuit (10).

3. Control circuit according to claim 2,
**characterized in that**,
this has a further current source (I_{q2}), which with its one terminal is at the first reference potential and which with its other terminal is connected via a second controllable switch (S5) with the configuration input (17), wherein the configuration resistance (R_{q1}) can be set with its second terminal to the first or the second reference potential and the two switches (S4, S5) are so controlled by the configuration circuit (10), that initially only one of the two switches (S4, S5), and then only the other, is closed.

4. Control circuit according to claim 3,
**characterized in that**,
two configuration resistances (R_{q1}, R_{q2}) are connectable with the configuration input (17), the terminals of which not connected with the configuration input (17) are to be placed at, on the one hand, the first and, on the other hand, the second reference potential,
wherein the configuration circuit (10) stores in the memory two digital values, having at least 2 bits, corresponding to the resistance values of the two configuration resistances (R_{q1}, R_{q2}).

5. Electronic ballast for at least one gas discharge lamp (LA), having a rectifier circuit (2) connectable to an a.c. voltage source (U₀), a smoothing circuit, connected to the output of the rectifier circuit (2), for the generation of an intermediate circuit voltage (U_{Z}), and an inverter (4), fed with the intermediate circuit voltage (U_{Z}), to the output of which inverter a terminal for the load circuit (5) containing the lamp (LA) is connected,
wherein the ballast has a control circuit (6) which detects one or more operating parameters of the load circuit (5) and/or of the smoothing circuit (3) and in dependence upon at least one operating parameter controls the inverter (4) and/or a controllable switch (S1) of the smoothing circuit,
**characterized in that**,
the control circuit is constituted according to any of claims 1 to 4,
and **in that** the control circuit (6) further
a) uses the analog/digital converter (ADC₁₋₄) also for the conversion of the detected operating parameter of the load circuit (5) and/or of the smoothing circuit (3) into a further digital value consisting of at least 2 bits or
b) has a further analog/digital converter (ADC₁₋₄) for the conversion of the detected operating parameter of the load circuit (5) and/or of the smoothing circuit (3) into a further digital value consisting of at least 2 bits,
wherein the control circuit (6), on the basis of this further digital value, calculates in a digital regulation circuit (9) switching information for operation of the inverter (4) and/or of the controllable switch (S1) of the switched regulator and passes this on to a driver circuit (7) which transforms this switching information into a corresponding control signal,
and wherein the control circuit (6), upon the calculation of the switching information, takes into account the at least one value stored in the memory of the configuration circuit (10).

6. Electronic ballast according to claim 5,
**characterized in that**,
the smoothing circuit (3) is formed by means of an up-converter.

7. Electronic ballast according to claim 6,
**characterized in that**,
the control circuit (6) controls a controllable switch (S1) of the up-converter.

8. Electronic ballast according to claim 7,
**characterized in that**, the control circuit (6) detects the intermediate circuit voltage (U_{Z}).

9. Electronic ballast according to claim 7 or 8,
**characterized in that**,
the control circuit (6) detects the current (I_{L}) flowing through an inductance (L) of the up-converter.

10. Electronic ballast according to any of claims 5 to 9,
**characterized in that**,
the control circuit (6) detects the lamp voltage.

11. Electronic ballast according to any of claims 5 or 10,
**characterized in that**,
the control circuit (6) detects the lamp current.

12. Electronic ballast according to any of claims 5 or 11,
**characterized in that**,
the control circuit (6) has a clock (8) for passing a clock signal to the components (ADC₁ - ADC₄, 9, 10) of the control unit (6).

13. Electronic ballast according to any preceding claim,
**characterized in that**,
the control unit (6) is constituted as an application specific integrated circuit.

14. Method for the configuration of a control circuit, which is provided for use in an electronic ballast for the operation of at least one gas discharge lamp (LA), wherein
a) a configuration input (17) of the control circuit is connected with one terminal of a configuration resistance (R_{q1}), the other terminal of which is placed at a first reference potential,
b) a current source (I_{q1}) which lies with one terminal at a second reference potential (V_{dd}), and with its other terminal is connected with the configuration input (17),
c) a digital value, having at least 2 bits, is generated corresponding to the resistance value of the configuration resistance (Rg₁) and
d) the digital value is stored in a configuration circuit (10) of the control circuit.

## Revendications

1. Circuit de commande (6) destiné à être utilisé dans un stabilisateur électrique pour le fonctionnement d'au moins une lampe à décharge de gaz (LA),
avec une entrée de configuration (17) pour détecter un paramètre de configuration, à laquelle est reliée une borne d'une résistance de configuration (R_{q1}) dont l'autre borne est reliée à un premier potentiel de référence,
au moins une source de courant (I_{q1}) qui par l'une de ses bornes est reliée à un deuxième potentiel de référence (V_{dd}) et qui par son autre borne est reliée à l'entrée de configuration (17),
**caractérisé par**
un convertisseur analogique/numérique (ADC₄) qui est relié à l'entrée de configuration (17) et produit une valeur numérique correspondant à la valeur de la résistance de configuration (R_{g1},) avec au moins 2 bits, et
un circuit de configuration (10) qui contient au moins une mémoire dans laquelle est mémorisée la valeur numérique.

2. Circuit de commande selon la revendication 1,
**caractérisé**
**en ce que** la source de courant (I_{q1}) peut être reliée, par un interrupteur commandable (S4), à l'entrée de configuration (17), cet interrupteur (S4) étant commandé par le circuit de configuration (10).

3. Circuit de commande selon la revendication 2,
**caractérisé en ce que** celui-ci comporte une autre source de courant (I_{q2}) qui par l'une de ses bornes est reliée au premier potentiel de référence et qui, par son autre borne, peut être reliée à l'entrée de configuration (17), par l'intermédiaire d'un deuxième interrupteur (S5) commandable, la résistance de configuration (R_{q1}) devant être reliée par sa deuxième borne au premier ou au deuxième potentiel de référence, et les deux interrupteurs (S4, S5) étant commandés par le circuit de configuration (10) de manière que d'abord seul l'un des deux interrupteurs (S4, S5) puis seulement l'autre soit fermé.

4. Circuit de commande selon la revendication 3,
**caractérisé en ce qu'**à l'entrée de configuration (17) peuvent être reliées deux résistances de configuration (R_{q1}, R_{q2}) dont les bornes, non reliées à l'entrée de configuration (17), doivent être reliées d'une part au premier potentiel de référence et d'autre part au deuxième potentiel de référence, le circuit de configuration (10) mémorisant dans la mémoire deux valeurs numériques, correspondant aux valeurs de résistance des deux résistances de configuration (R_{q1}, R_{g2}) avec au moins 2 bits.

5. Stabilisateur électronique pour une moins une lampe à décharge de gaz (LA), avec un circuit redresseur (2) pouvant être raccordé à une source de tension alternative (U₀,) un circuit de lissage (3) raccordé à la sortie du circuit redresseur (2) pour produire une tension de circuit intermédiaire (U_{Z},) et avec un onduleur (4) alimenté avec la tension de circuit intermédiaire (U_{Z},) à la sortie duquel est raccordé un circuit de charge (5) comportant des connexions pour la lampe (LA), le stabilisateur comportant un circuit de commande (6) qui détecte un ou plusieurs paramètres de fonctionnement du circuit de charge (5) et/ou du circuit de lissage (3), et qui pilote, en fonction du au moins un paramètre de fonctionnement, l'onduleur (4) et/ou un interrupteur (S1) commandable du circuit de lissage,
**caractérisé**
**en ce que** le circuit de commande est réalisé suivant l'une des revendications 1 à 4, et en ce qu'en outre le circuit de commande (6)
a) utilise le convertisseur analogique/numérique (ADC₁₋₄) également pour la conversion du paramètre de fonctionnement relevé du circuit de charge (5) et/ou du circuit de lissage (3) en une autre valeur numérique constituée d'au moins 2 bits, ou
b) comporte un autre convertisseur analogique/numérique (ADC₁₋₄) pour convertir le paramètre de fonctionnement relevé du circuit de charge (5) et/ou du circuit de lissage (3) en une autre valeur numérique constituée d'au moins 2 bits,
le circuit de commande (6) calculant, sur la base de cette autre valeur numérique, dans un circuit de régulation numérique (9), une information de commande pour le fonctionnement de l'onduleur (4) et/ou de l'interrupteur commandable (S1) du régulateur de commande, et la transmettant à un circuit d'excitation (7) qui convertit cette information de commande en un signal de commande correspondant,
et le circuit de commande (6) prenant en compte, lors du calcul de l'information de commande, la au moins une valeur mémorisée dans la mémoire du circuit de configuration (10).

6. Stabilisateur électronique selon la revendication 5,
**caractérisé**
**en ce que** le circuit de lissage (3) est formé par un transformateur-élévateur.

7. Stabilisateur électronique selon la revendication 6,
**caractérisé en ce que** le circuit de commande (6) pilote un interrupteur (S1) commandable du transformateur-élévateur.

8. Stabilisateur électronique selon la revendication 7,
**caractérisé**
**en ce que** le circuit de commande (6) relève la tension du circuit intermédiaire (U_{Z}).

9. Stabilisateur électronique selon la revendication 7 ou 8,
**caractérisé**
**en ce que** le circuit de commande (6) relève le courant (I_{L}) traversant une inductance (L) du transformateur-élévateur.

10. Stabilisateur électronique selon l'une des revendications 5 à 9,
**caractérisé**
**en ce que** le circuit de commande (6) relève la tension de la lampe.

11. Stabilisateur électronique selon l'une des revendications 5 ou 10,
**caractérisé**
**en ce que** le circuit de commande (6) relève le courant de la lampe.

12. Stabilisateur électronique selon l'une des revendications 5 ou 11,
**caractérisé**
**en ce que** l'unité de commande (6) comporte un générateur de rythme (8) pour la transmission d'un signal de rythme aux composants (ADC₁-ADC₄, 9, 10) de l'unité de commande (6).

13. Stabilisateur électronique selon l'une des revendications précédentes,
**caractérisé**
**en ce que** l'unité de commande (6) est réalisée sous la forme d'un circuit intégré spécifique à l'application.

14. Procédé de configuration d'un circuit de commande qui est prévu pour être utilisé dans un stabilisateur électrique pour le fonctionnement d'au moins une lampe à décharge de gaz (LA),
dans lequel
a) une entrée de configuration (17) du circuit de commande est reliée à une borne d'une résistance de configuration (R_{q1}) dont l'autre borne est reliée à un premier potentiel de référence,
b) une source de courant (l_{q1},) qui par une borne est reliée à un deuxième potentiel de référence (V_{dd},), est reliée par son autre borne à l'entrée de configuration (17),
c) une valeur numérique, correspondant à la valeur de résistance de la résistance de configuration (R_{g1}), est produite avec au moins 2 bits, et
d) la valeur numérique est mémorisée dans un circuit de configuration (10) du circuit de commande.
